# EUROPEAN PATENT APPLICATION

(11) **EP 2 997 806 A1**
(43) Date of publication of application: **23.03.2016**
(21) Application number: 15184713.4
(22) Date of filing: 10.09.2015
(51) Int. Cl.: A01C 3/00, C05F 3/00

(54) **A PLANT AND A METHOD FOR ACIDIFYING ANIMAL MANURE**

(30) Priority: 17.09.2014 DK 201470570
(71) Applicant: Jørgen Hyldgaard Staldservice A/S, 7500 Holstebro (DK)
(72) Inventor: HYLDGAARD, Ken, 7500 Holstebro (DK)
(74) Representative: Patentgruppen

(57) **Abstract**

Disclosed is a method for acidifying animal manure (5). The method comprises the steps of:
• adding and mixing an acidification agent (4) into a first portion of animal manure (5) in a process tank (2),
• conveying a second portion of animal manure (5) to the process tank (2) and mixing it with the first portion to form an acidified mixture, and
• removing a part of the acidified mixture from the process tank (2).

Wherein the first portion it bigger than the second portion and bigger than the removed part of the acidified mixture.

A plant (1) for acidification of animal manure (5) is also disclosed.

## Description

### Field of the Invention

The present invention relates to a method and a plant for acidifying animal manure wherein the animal manure is acidified a process tank.

### Background of the Invention

In traditional livestock farms, it is a known problem that animal manure from livestock, such as cows or pigs - typically in the form of liquid manure - stored in a storage tank smells. It is also recognized that some of these obnoxious smells stem from ammonia emission from the livestock manure.

Furthermore, ammonia emission has the drawback that the fertilizing effect of the livestock manure is reduced, and thus it is desirable that the ammonia emission from livestock manure in the storage tank is reduced to both reduce obnoxious smells - from process and storage tanks and/or from the livestock manure while this is distributed on a field and when it has been distributed on the field - as well as to increase the fertilizing effect of the livestock manure.

Thus, it is known to acidify the liquid manure in order to reduce the ammonia emission from the manure. However, when adding acid to animal manure the manure will have a tendency to generate foam which in worst cases will overflow the storage tank. This problem is recognised in the European patent application EP 2 705 741 A1. A solution could be adding some kind of antifoaming agent but this would be expensive, harmful to the environment and often not sufficiently efficient. From EP 2 705 741 A1 it is therefore known to treat the animal manure in a storage tank by quickly mixing the acid into the stored manure by means of a thruster device mounted on the arm of a crane. However this device is expensive, complicated and vulnerable.

Consequently, it is an object of the invention to provide an advantageous technique for acidifying animal manure.

### The invention

The invention relates to a method for acidifying animal manure. The method comprises the steps of:
- adding and mixing an acidification agent into a first portion of animal manure in a process tank,
- conveying a second portion of animal manure to the process tank and mixing it with the first portion to form an acidified mixture, and
- removing a part of the acidified mixture from the process tank

Wherein the first portion it bigger than the second portion and bigger than the removed part of the acidified mixture.

At start-up it will take some time to acidify the first portion in the process tank to avoid or at least reduce foam generation. But once the initial batch has been acidified to a desired pH-level, the next first portion will be the part of the acidified mixture that remains in the process tank once the part mentioned in the last method step has been removed. I.e. the rest of the time when the acidification plant is in operation, the first portion will be pre-acidified and only a small amount of acidification agent will have to be added to thus increasing capacity and due to the small amount of acidification agent the risk of foaming is also reduced.

Furthermore, if the first portion is too small in relation to the second portion, the pH level of the first portion will have to be very low before the second portion is added to ensure a desirable acidification level in the finish mixture. Lowering the pH level this much is time consuming if foam generation has to be avoided. And if the difference between the pH level of the first portion and the second portion is too big when the two portions is mixed the risk of foam generation is increased. It is therefore advantageous that the first portion is bigger than the second portion.

And to ensure that the method can run in a simple and cyclic manner it is advantageous that the first portion is also bigger that the removed part of the acidified mixture.

It should be noted that in this connection the term "animal manure" should be taken to mean any form of urine and/or faeces, either separately or mixed to liquid manure, and in this connection the term "livestock" primarily covers cows and pigs, but it is also conceivable to use the plant for acidifying animal manure from goats, sheep, horses, mink, chickens or other farm animals.

It should be noted that in this connection the term "acidification" means that the pH level of the animal manure is lowered, i.e. that the animal manure is acidified. In this case, the animal manure is acidified from its normal pH level (typically above 7) to a pH level of between 5 and 6. The acidification agent itself will typically be an acid, such as sulphuric acid, nitric acid, formic acid, phosphoric acid or the like or another acidic agent suitable for lowering the pH level of the animal manure.

In an aspect of the invention, said first portion is between 1.2 and 50, preferably between 3 and 30 and most preferred between 6 and 20 times bigger than said second portion.

If the first portion is too big in relation to the second portion, the capacity of the plant is too low compared to the preliminary expenses of manufacturing and setting up such a plant. However, if the first portion is too little in relation to the second portion, the risk of foam generation is too high and the present size ratios therefore present an advantageous relationship between capacity and efficiency.

In an aspect of the invention, said first portion is between 1.2 and 50, preferably between 3 and 30 and most preferred between 6 and 20 times bigger than said removed part of said acidified mixture.

If the first portion is too big in relation to the removed part of the acidified mixture, the capacity of the plant is too low compared to the preliminary expenses of manufacturing and setting up such a plant. However, if the first portion is too little in relation to the removed part of the acidified mixture, too little acidified mixture remains in the process tank to form a new first portion of the succeeding cycle and the risk of foam generation is therefore increased in the following cycle. The present size ratios therefore present an advantageous relationship between capacity and efficiency.

In an aspect of the invention, said second portion and said removed part of said acidified mixture are substantially equal in size.

Removing substantially as much acidified manure as being filled into the process tank (in form of the second portion) is advantageous in that it enables a simple cyclic and uniform operation of the plant.

However, it should be noted that the removed portion most likely will have to be slightly bigger than the second portion in that material added during the acidification process - acidification agent and e.g. water, anti-odour agent, fertilising agent or other - also has to be removed with the removed part of the acidified mixture to ensure that the volume of the added material do not accumulate in the process tank.

In an aspect of the invention, said first portion of animal manure is formed by the part of acidified mixture remaining in said process tank, after said removed part of said acidified mixture has been removed.

As previously explained the present method is supposed to run cyclically in the process tank so it is advantageous to form the first portion in the process tank from the remaining part of the acidified mixture - that has not been removed at the end of the previous cycle - in that the first portion is hereby pre-acidified and can therefore quickly be acidified to the required level without the risk of generating foam.

In an aspect of the invention, said acidification agent is added to said first portion of animal manure until the pH level is below 6.2, preferably below 5.8.

If too little acid is added only a very small second portion can be mixed into the first portion without risking that the pH level of the removed acidified mixture becomes too high to be sufficiently effective in preventing ammonia emission. However, if too much acid is added the risk of foam generation is increased and the present pH levels therefore presents an advantageous relationship between efficiency and foam generation risk.

In an aspect of the invention, said removed part of said acidified mixture has a pH level below 6.5, preferably below 6.2.

If the pH level of the acidified mixture being removed from the process tank is too low the cost of the acidification process is unnecessarily increased and if the pH level of the acidified mixture is too high the acid will not efficiently prevent ammonia emission. Thus, the present pH level presents an advantageous between cost and efficiency.

In an aspect of the invention, said acidification agent is admixed into said first portion in said process tank during agitation.

An acidification agent is typically an aggressive acid - such as sulphuric acid - and there is therefore a risk that the process tank or related equipment is damaged if the tank comes into contact with a too high concentration of the acidification agent. Thus, it is advantageous to agitate the animal manure during supply of the acidification agent to ensure that the acidification agent is quickly and evenly distributed in the animal manure.

Furthermore, if the acidification agent is not quickly mixed into the animal manure the risk of high acid concentrations locally is increased which can lead to foam generation.

In an aspect of the invention, said agitation is performed by supplying means conveying said second portion of animal manure to said process tank.

Performing the agitation of the animal manure in the process tank by means of the same means used for conveying the second portion of animal manure to the process tank is advantageous in that it provides for an inexpensive method and plant design.

In an aspect of the invention, said agitation is performed by removing means removing said part of said acidified mixture from said process tank.

Performing the agitation of the animal manure in the process tank by means of the same means used for removing the part of the acidified mixture from the process tank is advantageous in that it provides for an inexpensive method and plant design.

In an aspect of the invention, said second portion of animal manure is conveyed to said process tank from a livestock stable.

Conveying the second portion of animal manure to the process tank either directly from a livestock stable or via an intermediate pre-tank is advantageous in that the raw untreated animal manure hereby is quickly feed to the process tank.

In an aspect of the invention, said removed part of said acidified mixture is moved to a storage tank.

Moving the removed part of the acidified mixture to a storage tank is advantageous in that ammonia emission is hereby reduced from the storage tank while the animal manure is stored in the storage tank. And once the stored animal manure is transported to and distributed on a field, ammonia emission from the field is reduced, problems regarding obnoxious smell are reduced and the fertilizing effect of the animal manure is increased.

In an aspect of the invention, said first portion of animal manure in said process tank is pre-acidified before said second portion of animal manure is mixed in with said first portion.

Pre-acidifying the first portion of animal manure in the process tank - before mixing it with the second portion of animal manure - is advantageous in that it hereby is possible to acidify the second portion of animal manure simply by mixing it with the first portion - hereby reducing the risk of foam generation during acidifying of the second portion.

The invention further relates to a plant for acidification of animal manure by means of a method according to any of the previously discussed methods for acidifying animal manure.

Hereby is achieved an advantageous embodiment of the invention.

In an aspect of the invention, said plant comprises an acidification agent tank, and wherein said acidification agent tank and said process tank are arranged on the same common continuous foundation structure.

Forming the acidification agent tank and the process tank on the same common continuous foundation structure - such as on the same welded structure, in an ISO container or other - is advantageous in that it simplifies the manufacturing, transportation and installation process.

In an aspect of the invention, said process tank comprises at least two separate pH level sensors.

The functionality of the acidification plant is highly dependent on reliable pH level measurements in that potentially dangerous or at least damaging situation can arise if e.g. too much acid is added during the acidification process. It is therefore advantageous to measure the pH level in the process tank by means of two separate pH level sensors in that this will increase reliability and simplify fault localisation.

One aspect of the invention is that said acidification agent is sulphuric acid.

Sulphuric acid is relatively cheap and suitable for acidifying animal manure.

### Figures

The invention will be explained further herein below with reference to the figures in which:
- Fig. 1: illustrates a first embodiment of a plant for acidification of animal manure, as seen in top and side view,
- Fig. 2: illustrates a second embodiment of a plant for acidification of animal manure, as seen in top and side view, and
- Fig. 3: illustrates a process tank and an acidification agent tank, as seen from the side.

### Detailed description

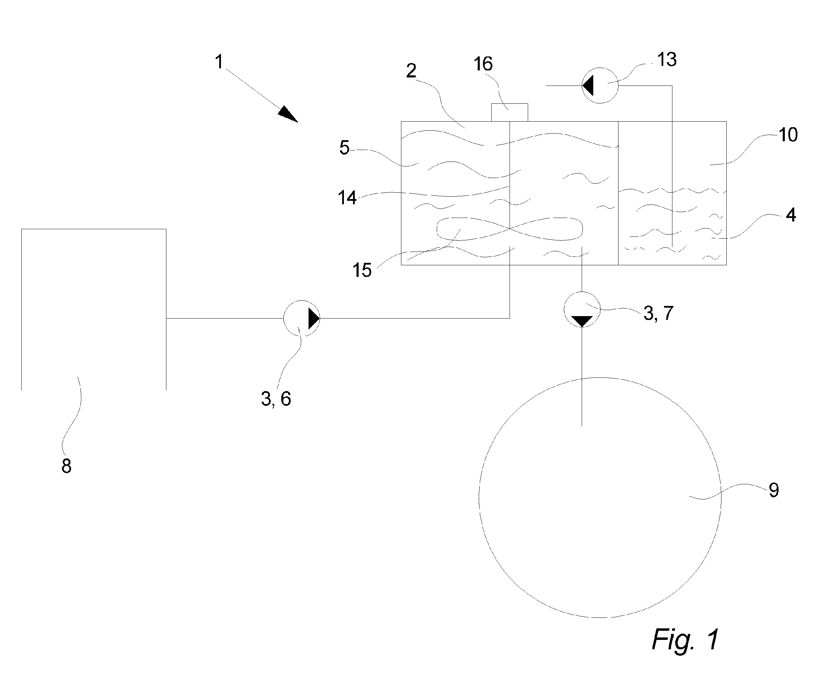

Fig. 1 illustrates a first embodiment of a plant 1 for acidification of animal manure 5, where the livestock stable 8 and the storage tank 9 are seen from the top while the process tank 2 and the acidification agent tank 10 are seen from the side.

In this embodiment an initial portion of animal manure 5 is conveyed from a livestock stable 8 to a process tank 2 by means of supplying means 6 which in this case is dedicated pump means 3.

An acidification agent tank 10 is in this case located next to the process tank 2 so that an acidification agent 4 may be pumped into the process tank 2 by means of an acidification agent pump 13. However, in another embodiment of the invention, the acidification agent 4 could instead be conveyed from the acidification agent tank 10 and into the process tank 2 solely by means of gravity by positioning the acidification agent tank 10 above the process tank 2.

In this embodiment the acidification agent 4 is pumped into the animal manure 5 in the process tank 2 during agitation of the manure.

In this embodiment of the invention, this agitation is performed by a mixing unit 14 in the form of a propeller agitator 15 driven by an electric motor 16; but in another embodiment of the invention, the propeller agitator 15 could be driven by another means or the mixing unit 14 could be constructed as a whisk, mixing paddles, nozzles creating high velocity circulation in the animal manure 5, a unit for shaking or rotating the entire process tank 2 or it could be any other unit suitable for ensuring that the acidification agent 4 is quickly and efficiently distributed in a tolerably even way in the animal manure 5.

In this embodiment, the acidification agent 4 is supplied to the animal manure in the process tank 2 substantially directly above the mixing unit 14 to ensure that the supplied acidification agent 4 is quickly mixed with all of the animal manure 5 in the process tank 2; but in another embodiment of the invention, the acidification agent 4 could be supplied somewhere else in the process tank 2, or it could be supplied in several different locations in the process tank 2 at the same time. This could be advantageous as a quicker mixing of the acidification agent 4 in the animal manure 5 could be ensured if, from the beginning, the acidification agent 4 is distributed in a larger part of the animal manure 5.

Once this initial first portion of animal manure 5 has been acidified to a desired pH level the actual acidification cycle can be initiated. The first step of this cycle will be to convey a second portion of animal manure 5 from the livestock stable 8 to the process tank 2 in which the second portion is mixed with the first portion during agitation so that the raw animal manure of the second portion is acidified by being mixed with the pre-acidified first portion to form an acidified mixture.

Once the first and the second portion have been sufficiently mixed to form an acidified mixture with a substantially constant and substantially uniform pH level a smaller part of the acidified mixture is removed from the process tank 2 by means of removing means 7 which in this case is dedicated pump means 3.

The acidified mixture is pumped to a storage tank 9 in which it can be stored until it can be moved to a biogas plant, until it can be distributed on a field or other. Since the stored manure is acidified, the ammonia emission is considerably reduced and the acidified mixture can therefore be stored in an open storage tank 9, which is considerably cheaper than a closed or roofed storage tank.

Once a part of the acidified mixture has been removed to the storage tank 9 the remaining part of the acidified mixture is now the first portion of a succeeding cycle which starts by lowering the pH level of the first portion by adding a acidification agent 4, then add a second portion of raw animal manure 5 from the livestock stable 8 and mix it with the first portion, remove a part of the acidified mixture to the storage tank 9 and so on.

In this embodiment the process tank 2 will hold 16 m³. Thus, in this embodiment the first portion has a volume of approximately 1.5 m³, while the second portion has a volume of approximately 14 m³ - making the first portion 9.333 times bigger than the second portion. To enable cyclic operation, the part of the acidified mixture that is removed to the storage tank 9 is in this case also around 1.5 m³ - i.e. the first portion is also around 9.333 times bigger than the removed portion. However, it is obvious to the skilled person that in another embodiment the volumes of the portions and the tank 2 could be bigger if greater capacity was desired or smaller if smaller capacity was sufficient.

Also in another embodiment the ratio between the portions could be different e.g. in dependency with type of animal manure, type of acidification agent 4, acidification demand, legal requirement or other.

In this embodiment and with the given ratio between the first and second portion the first portion is acidified to a pH level of between 4.5 and 5 before the second portion is added. Once the second portion is mixed into the first portion the pH level of the acidified mixture is in this case between 5.5 and 6. However, these pH levels can obviously be adjusted e.g. according to desired pH level in the storage tank 9, according to type of animal manure, according to ratio between first and second portion, according to type of acidification agent 4 or other.

In the example shown, the process tank 2 and the acidification agent tank 10 are formed as separate fully closed containers arranged on the ground surface. However, in another embodiment at least the process tank 2 could be a closed container buried in the ground, it could be formed as an open tank either above or below surface or it could be formed in another way.

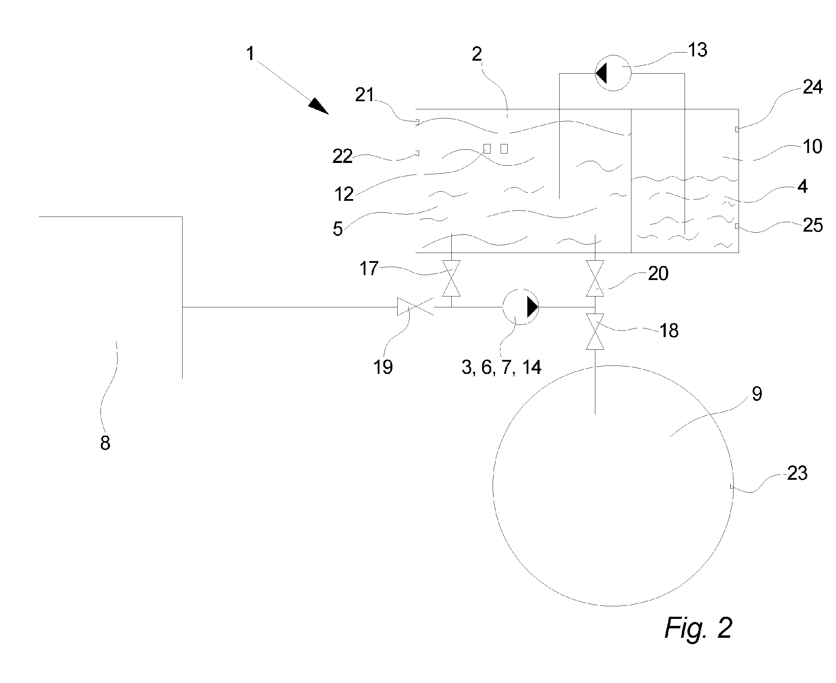

Fig. 2 illustrates a second embodiment of a plant 1 for acidification of animal manure 5, where the livestock stable 8 and the storage tank 9 are seen from the top while the process tank 2 and the acidification agent tank 10 are seen from the side.

In this embodiment the supplying means 6, the removing means 7 and the mixing unit 14 are formed by a single pump means 3 assisted by a number of valves 17, 18, 19, 20. To pump a second portion of raw animal manure from the livestock stable 8 to the process tank 2 an outlet valve 17 and a storage tank valve 18 are closed while a stable valve 19 and an inlet valve 20 are open so that when the pump means 3 are activated the second portion will be pumped into the process tank 2.

During agitation - while and e.g. after the acidification agent 4 is added in the process tank 2 - the stable valve 19 and the storage tank valve 18 are closed while the inlet valve 20 and the outlet valve 17 are open so that the manure 5 in the process tank is circulated by a mixing unit 14 formed by the pump means 3. In such an embodiment - or in the embodiment disclosed in fig. 1 - the inlet pipe could be provided with some sort of inlet nozzle (not shown) arranged to diffuse and/or increase the speed of the flow. And/or the inlet pipe could be provided with directional means arranged to direct the inlet flow in a specific direction in the tank to increase the agitation - either in a fixed direction, in an occasionally varying direction or in a constantly varying direction.

In another embodiment of the invention the agitation embodiments disclosed in relation with fig. 1 could be combined with the agitation embodiments disclosed in relation with fig. 2.

To move a part of the acidified mixture from the process tank 2 to the storage tank 9, the stable valve 19 and the inlet valve 20 are closed while the outlet valve 17 and the storage tank valve 18 are open.

In this embodiment the quantity of animal manure 5 conveyed from the stable 8 and into the process tank 2 - i.e. the size of the second portion - is determined by an upper level sensor in the process tank 2, and the acidified mixture is moved to the storage tank 9 at the end of each cycle until at lower level sensor 22 in the process than 2 is activated. However, in another embodiment these amounts - or levels - could be detected by means of flow sensors, pressure sensors, floating devices, ultrasonic sensors, a timer or other.

Likewise, in this embodiment the quantity of acidification agent 4 added to the first portion in the process tank 2 is be determined based on a pH measurement performed by two pH level sensors 12 arranged in the process tank 2. However, in another embodiment the amount of added acidification agent 4 could be determined on the basis of a preceding measurement of the pH value for the animal manure 5 in the stable 8 or a fixed quantity of acidification agent 4 could be added to a fixed sized first portion, or the quantity of acidification agent 4 can be determined in another way.

In this embodiment the two pH level sensors 12 are flushed with water between cycles to ensure more precise measurements, to calibrate the sensors and/or to determine malfunctions of the sensors.

In this embodiment the acidification agent tank 10 is further provided with an upper acid level sensor 24 and a lower acid level sensor 25 so that an operator can be notified before the plant 1 runs out of acidification agent 4 and so that the acidification agent tank 10 is not overfilled. However in another embodiment this could be controlled visually, by means of other sensors or in another way.

Also, in this embodiment the storage tank 9 is provided with a storage level sensor 23 ensuring that acidified mixture is not pumped from the acidification plant 1 and to the storage tank 9 if the storage tank 9 already is full.

In a preferred embodiment of the invention the operation of the plant 1 is controlled by means of a control unit (not shown) e.g. in the form of a PLC (Programmable Logic Controller), a PC or other being able to control some or all of the pumps 3, 6, 7, 13, valves 17, 18, 19, 20, mixing unit 14 and/or other, on the basis of input from some or all of the sensors 12, 21, 22, 23, 24, 24, preprogramed logic, , mixing unit 14, manual input and/or other.

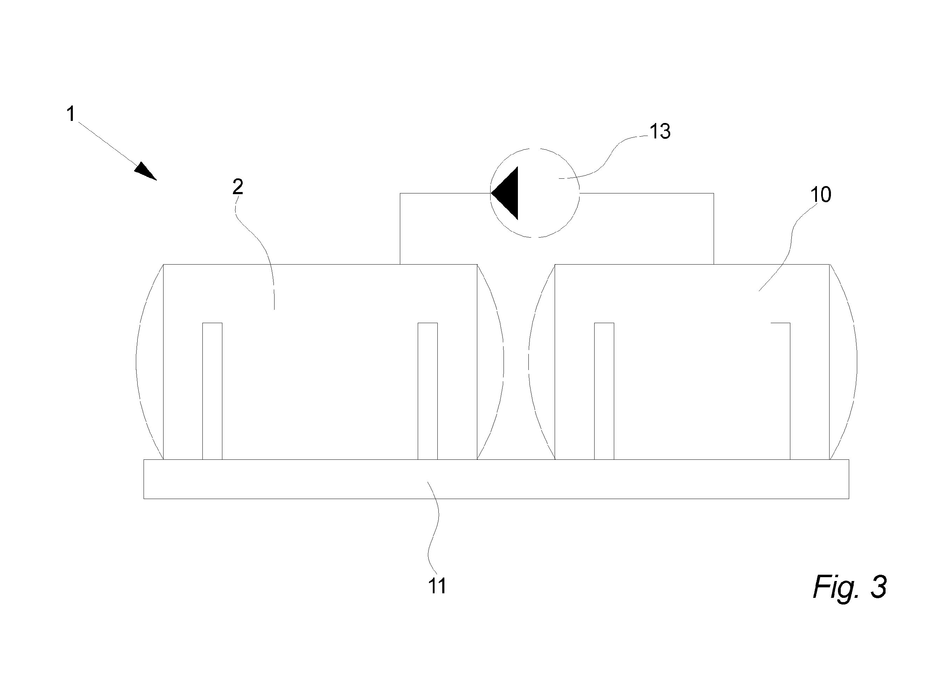

Fig. 3 illustrates a process tank 2 and an acidification agent tank 10, as seen from the side.

In this embodiment the process tank 2 and the acidification agent tank 10 are formed as two completely separate tanks 2, 10 arranged on the same common continuous foundation structure 11 which in this case comprises a number of welded beams enabling that the entire unit can be moved around by means of a crane or even a forklift.

In another embodiment the process tank 2 and the acidification agent tank 10 could be arranged in a standardized ISO container to enable simple and easy transport and handling of the unit. Is such a case the ISO container would form the common continuous foundation structure 11.

In the foregoing, the invention is described in relation to specific embodiments of acidification plants 1, process tanks 2, foundation structures 11 etc. as shown in the drawings, but it is readily understood by a person skilled in the art that the invention can be varied in numerous ways within the scope of the appended claims.

### List

- 1.: Plant for acidifying animal manure
- 2.: Process tank
- 3.: Pump means
- 4.: Acidification agent
- 5.: Animal manure
- 6.: Supplying means
- 7.: Removing means
- 8.: Livestock stable
- 9.: Storage tank
- 10.: Acidification agent tank
- 11.: Foundation structure
- 12.: pH level sensor
- 13.: Acidification agent pump
- 14.: Mixing unit
- 15.: Propeller agitator
- 16.: Electric motor
- 17.: Outlet valve
- 18.: Storage tank valve
- 19.: Stable valve
- 20.: Inlet valve
- 21.: Upper level sensor
- 22.: Lower level sensor
- 23.: Storage level sensor
- 24.: Upper acid level sensor
- 25.: Lower acid level sensor

## Claims

1. A method for acidifying animal manure (5), wherein said method comprises the steps of:
• adding and mixing an acidification agent (4) into a first portion of animal manure (5) in a process tank (2),
• conveying a second portion of animal manure (5) to said process tank (2) and mixing it with said first portion to form an acidified mixture, and
• removing a part of said acidified mixture from said process tank (2),
wherein said first portion it bigger than said second portion and bigger than said removed part of said acidified mixture.

2. A method according to claim 1, wherein said first portion is between 1.2 and 50, preferably between 3 and 30 and most preferred between 6 and 20 times bigger than said second portion.

3. A method according to claim 1 or 2, wherein said first portion is between 1.2 and 50, preferably between 3 and 30 and most preferred between 6 and 20 times bigger than said removed part of said acidified mixture.

4. A method according to one or more of the preceding claims, wherein said second portion and said removed part of said acidified mixture are substantially equal in size.

5. A method according to one or more of the preceding claims, wherein said first portion of animal manure (5) is formed by the part of acidified mixture remaining in said process tank (2), after said removed part of said acidified mixture has been removed.

6. A method according to one or more of the preceding claims, wherein said acidification agent (4) is added to said first portion of animal manure (5) until the pH level is below 6.2, preferably below 5.8.

7. A method according to one or more of the preceding claims, wherein said removed part of said acidified mixture has a pH level below 6.5, preferably below 6.2.

8. A method according to one or more of the preceding claims, wherein said acidification agent (4) is admixed into said first portion in said process tank (2) during agitation.

9. A method according to claim 8, wherein said agitation is performed by supplying means (6) conveying said second portion of animal manure (5) to said process tank (2).

10. A method according to claim 8 or 9, wherein said agitation is performed by removing means (7) removing said part of said acidified mixture from said process tank (2).

11. A method according to one or more of the preceding claims, wherein said second portion of animal manure (5) is conveyed to said process tank (2) from a livestock stable (8).

12. A method according to one or more of the preceding claims, wherein said removed part of said acidified mixture is moved to a storage tank (9).

13. A plant (1) for acidification of animal manure (5) by means of a method according to any of the preceding claims.

14. A plant (1) according to claim 13, wherein said plant (1) comprises an acidification agent tank (10), and wherein said acidification agent tank (10) and said process tank (2) are arranged on the same common continuous foundation structure (11).

15. A plant (1) according to claim 13 or 14, wherein said process tank (2) comprises at least two separate pH level sensors (12).
